# EUROPÄISCHE PATENTSCHRIFT

(11) **EP 1 445 523 B1**
(45) Veröffentlichungstag und Bekanntmachung des Hinweises auf die Patenterteilung: **22.03.2006**
(21) Anmeldenummer: 04380019.2
(22) Anmeldetag: 28.01.2004
(51) Int. Cl.: F16K 31/08, F16K 31/04

(54) **Ventil mit Motorantrieb für Gasdurchflusssteuerung**
Valve with motor actuation for gas flow regulating
Soupape à commande de moteur pour la commande d'écoulement de gaz

(30) Priorität: 04.02.2003 DE 20301719 U
(43) Veröffentlichungstag der Anmeldung: 11.08.2004
(73) Patentinhaber: Geyser Gastech S.A., 20570 Bergara (Gipuzkoa) (ES); Pauden Scientific & Technological Co. Ltd., Taipei, Sanchung City (TW)
(72) Erfinder: Huang, Chun-Chen, Sanchung Taipei (TW); Tomé, Jesus, 20570 Bergara Gipuzkoa (ES)
(74) Vertreter: Fernandez Guzman, Juan

(56) Entgegenhaltungen:
- DE-A- 4 423 313
- DE-A- 19 516 054
- DE-U- 20 216 686

## Beschreibung

Die vorliegende Erfindung bezieht sich auf ein Ventil mit Motorantrieb für Gasdurchflusssteuerung das im wesentlichen aus einem Ventilhauptteil, einem Ventilstößel, einem Getriebe zur Verminderung der Geschwindigkeit, einer Stange, einer Brücke, einem Schalter, einem Ventilzapfen und einer Ventilöffnung besteht, wobei das Ventil vorzugsweise eine Nockenscheibe und eine Brücke aufweist und diese beiden Teile durch einen Motor angetrieben werden. Die Brücke dient hier zur Steuerung eines zweiten Magnetelements in Richtung auf das erste Magnetelement zu bewegen und anzuziehen und bewirkt dabei der Ventilstößel und der Ventilzapfen weiter in die Innenseite des Ventilhaupteils zu bewegen, um eine Ventilöffnung allmählich zu öffnen, wobei der Motorlauf nach der vollständigen Öffnung der Ventilöffnung bzw. im Laufe der Öffnung der Ventilöffnung zweckmäßig unterbrochen werden kann, so dass einen vorteilhaften Öffnungszustand der Ventilöffnung zur Steuerung einer konstanten Gasversorgung halten zu können.

Bekanntlich wird ein Magnetventil für Steuerung des Gasdurchflusses eines Heißwassergeräts im wesentlichen aus einer Magnetspule, einem festverbundenen Magnet, einem beweglichen Magnet und einem zusammenwirkenden Ventilzapfen besteht. Im elektrisch eingeschalteten Zustand der Magnetspule kann der bewegliche Magnet sich in Richtung auf den festverbundenen Magnet angezogen werden, damit der am beweglichen Magnet eingebaute Ventilzapfen auf die von der Ventilöffnung abgewandten Richtung bewegen kann, um die Ventilöffnung zu öffen, so dass das Gas vom Gaseinlass über den geöffneten Durchgang zwischen dem Ventilzapfen und der Ventilöffnung und durch den Gasauslass in einen Gasbrenner versorgt werden kann. Da die Öffnung der Ventilöffnung durch den Anzug der Magnetelemente beeinflusst wird, wird die Ventilöffnung dabei schnell geöffnet. Auf diesem Grund kann eine gedämpfte Gasflusssteuerung leider nicht sichergestellt werden. Bei einer plötzlichen Öffnung der Ventilöffnung wird das Gas momentan ins Heißwassergerät (in den Gasbrenner) versorgt und bestünde es dabei eine Gefahr von Stichflamme.

Ein weiterer herkömmliche Magnetventil ist im Prinzip so aufgebaut, dass der Überdruck von beiden Seiten einer Membrane durch die Bewegung eines Magnetteils gesteuert wird und die Membrane in Richtung nach der Seite mit niedrigem Druck bewegen wird, um den mit dem Ventillzapfen zusammenwirkenden Ventilstößel aktivieren zu können und den Ventilzapfen in von Ventilöffnung abgewandter Richtung weiter bewegen zu können, damit die Ventilöffnung zum Gasversorgungszweck geöffnet werden kann. Nachteilig bei o.g. bekannten Konstruktionen sind allerdings, dass im Verlauf der Bewegung des Magnetteils der Überdruck von beiden Seiten der Membrane momentan veränderlich ist, so dass die Membrane plötzlich in Richtung nach der Seite mit niedrigem Druck bewegen wird. Bei einer plötzlichen Öffnung der Ventilöffnung wird das Gas momentan ins Heißwassergerät (in den Gasbrenner) versorgt und bestünde es deswegen auch eine Gefahr von Stichflamme. Bei praktischer Verwendung, insbesondere in der Hauptverwendungszeit, wird der Gasdruck ziemlich schwach, deswegen wird eine genügende Ventilöffnung dabei nicht möglich und kann eine schwache Gasverbrennung verursachen.
DE20216686U offenbart ein Ventil gemäß dem Oberbegriff des Anspruchs 1.

Der Erfindung liegt somit die wichtige Aufgabe zugrunde, ein Ventil mit Motorantrieb für Gasdurchflusssteuerung der eingangs geschilderten Art so auszugestalten, dass ein Ventilstößel am Anschlussstutzen zwischen dem Ventilhauptteil und dem Gasventilgehäuse ausgebildet ist, wobei der Ventilhebel mit einem Ventilzapfen verbindet und eine Stange an dem gegenüber dem Ventilzapfen liegenden Ende des Ventilstößels aufweist. Ein erstes Magnetelement ist an diesem Ventilhebel fest angeordnet und ein zweites Magnetelement ist an dieser Stange angeordnet. Eine Nockenscheibe wird durch einen draußen am Ventilhauptteil eingebauten Motor und eine im Ventilhauptteil verlängernd angeordnete Antriebswelle eines Getriebes zur Verminderung der Geschwindigkeit angetrieben. Mittels der Zusammenwirkungsverhältnisse zwischen der Nockenscheibe und der Brücke können das erste Magnetelement und das zweite Magnetelement zweckmäßig gegenseitig magnetisch angezogen werden, um den Ventilstößel und den Ventilzapfen gleichzeitig mitzuwirken, um in Richtung auf die Inneseite des Ventilhauptteils bewegen zu ermöglichen, wobei deren Bewegungsgeschwindigkeit vom Getriebe zur Verminderung der Geschwindigkeit entsprechend gedämpt werden kann, um die Ventilöffnung allmählich langsam öffnen zu können, damit eine plötzliche Gasversorgung ausschließen zu können, um eine Gefahr von plötzlichen Stichflammen nach Feueranzündung zu vermeiden.

Der Erfindung liegt eine weitere Aufgabe zugrunde, ein Ventil mit Motorantrieb für Gasdurchflusssteuerung der eingangs geschilderten Art so auszugestalten, dass ein Schalter in der Zugrichtung der Öffnung des Ventilzapfens gestaltet ist, damit ein Motorlauf nach einer vollständigen Öffnung des Ventilzapfens sofort unterbrochen wird und die Ventilöffnung unter geöffneten Zustand halten zu können. Gegebenfalls kann der Nennausschaltkontakt des Schalters im Verlauf der Öffnung der Ventilöffnung betätigt werden, um den Motorantrieb vorläufig zu unterbrechen und eine langsame und kleine Feuerzündung mit einem kleinen Gasdurchfluß zu ermöglichen. Sobald eine automatische Zündung erfolgt ist, kann der Motor weiter laufen. Sobald der Ventilzapfen aus der Ventilöffnung vollständig entfernt und die Ventilöffnung vollständig geöffnet ist, kann der Motorlauf sofort unterbrochen werden.

Schließlich ist ein Ziel der Erfindung, ein Ventil mit Motorantrieb für Gasdurchflußsteuerung der eingangs geschilderten Art so auszugestalten, dass ein O-Ring jeweils am Durchgang zwischen der Antriebswelle des Motors und dem Ventilhautptteils, am Durchgang zwischen dem Ventilstößel und dem Ventilhauptteil sowie an der Grenzfläche zwischen dem Schalter und dem Ventilhauptteils ausgebildet ist, um eine Gasleckgefahr vermeiden zu können und die Haltbarkeit des erfindungsgemäßen Ventils mit Motorantrieb verlängern zu können.

Die gestellten Aufgaben werden durch die in Schutzansprüchen angegebenen Merkmale gelöst.

In der Zeichnung ist der Erfindungsgegenstand beispielweise dargestellt. Es zeigen
Fig. 1 eine Schnittdarstellung eines bevorzugten Ausführungsbeispiels der Erfindung;
Fig. 2 eine Schnittdarstellung der Erfindung, wobei der Ventil mit Motorantrieb unter normalen Zustand (der Motor läuft noch nicht) zeigt;
Fig. 3 eine Schnittdarstellung der Erfindung, wobei das erste Magnetelement und das zweite Magnetelement sich gegenseitig magnetisch angezogen zeigt;
Fig. 4 eine Schnittdarstellung der Erfindung, wobei die kleine Ventilöffnung des Ventilzapfens am anfangsgeöffneten Zustand zeigt;
Fig. 5 eine Schnittdarstelung der Erfindung, wobei die Ventilöffnung des Ventilzapfens am anfangsgeöffneten Zustand zeigt;
Fig. 6 eine schematische Darstellung der Erfindung, wobei die Ventilöffnung unter vollständigten geöffneten Zustand zeigt;
Fig. 7 einen Schaltplan zwischen dem erfindungsgemäßen Schalter und Motor;
Fig. 8 eine weitere Realisierungsform der vorliegenden Erfindung;
Fig. 9(A) eine Schnittdarstellung der Erfindung weiterer Realisierungsform gemäß der Fig. 8, wobei der Motorlauf nach der zweiten Betätigung des Schalters unter zweiten geöffneten Zustand unterbrochen zeigt;
Fig. 9(B) in vergrößerter Darstellung einen Teilschnitt des Sehalters gemäß Fig. 9(A)
Fig.10(A) eine Schnittdarstellung der Erfindung weiterer Realisierungsform gemäß der Fig. 8, wobei der Motorlauf nach der zweiten Betätigung des Schalters unter zweiten geöffneten Zustand der vollständig geöffneten Ventilöffnung unterbrochen zeigt;
Fig.10(B) in vergrößerter Darstellung einen Teilschnitt des Schalters gemäß Fig.10(A) und
Fig. 11 einen Schaltplan zwischen dem erfindungsgemäßen Schalter und Motor gemäß einer anderen Realisierungsform der vorliegenden Erfindung.

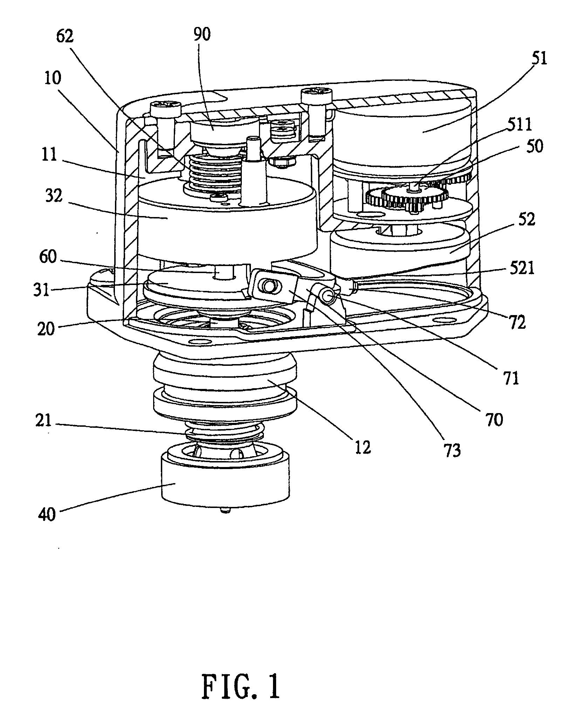

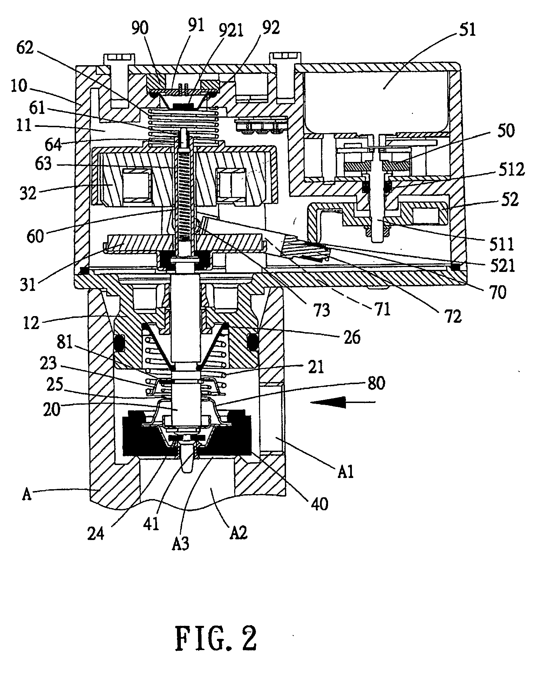

Ein erfindungsgemäßes Ventil mit Motorantrieb für Gasdurchflusssteuerung besteht im wesentlichen, wie in Fig. 1 und Fig. 2 ersichtlich, aus einem Ventilhauptteil (10), einem Ventilstößel (20), einem Getriebe zur Verminderung der Geschwindigkeit (50), einer Stange (60), einer Brücke, einer Ventilöffnung (A3) und einem Schalter (90).

Der Hauptteil (10) ist mit einem Gasventilgehäuse (A) ausgestaltet und umfasst einen Aufnahmeraum (11) für die Anordnung von betreffenden Betriebseinrichtungen und besitzt einen Anschlussstutzen (12) für die Verbindung mit dem Gasventilgehäuse (A).

Am Anschlussstutzen (12) weist einen Ventilstößel (20) auf. Ein Ende dieses Ventilstößels (20) ist durchbohrend im Innenraum des Ventilhauptteils (10) angeordnet und weist ein erstes Magnetelement (31) und ein erstes Rückstellelement (21) auf, wobei ein anderes Ende dieses Ventilstößels (20) einen durchbohrend im Innenraum des Ventilgehäuses (A) angeordneten Ventilzapfen (40) aufweist, damit der Ventilzapfen (40) die zwischen dem Gaseinlass (A1) und Gasauslass (A2) des Gasventilgehäuses (A) ausgebildete Ventilöffnung (A3) zweckmäßig abdecken zu können, um den Durchgang zwischen dem Gaseinlass (A1) und Gasauslass (A2) des Gasventilgehäuses (A) unter normalen Zustand durch die Zusammenwirkung des ersten Rückstellelements (21) zuschließen zu können.

Das Getriebe zur Verminderung der Geschwindigkeit (50) ist von eimem Motor (51)angetrieben und zwar diese beiden Bauteile sind draußen am Ventilhauptteil (10) angeordnet. Eine Antriebswelle (511) ist zusätzlich in die Innenseite des Ventilhauptteils (10) durchbohrend angebracht. Das Getriebe zur Verminderung der Geschwindigkeit (50) ist durch eine im Ventilhauptteil (10) ausgebildete Nockenscheibe (52) mit dem Motor (51) verbunden. Ein erster 0-Ring ist an der Anschlussstelle zwischen der Antriebswelle (511) und dem Ventilhauptteil (10) angeordnet, um eine Gasleckgefahr zu vermeiden. Die Verbindungen zwischen dem dem Getriebe zur Verminderung der Geschwindigkeit (50), dem Motor (51) und der Antriebswelle (511) dient zur Minderung der Geschwindigkeit der Nockenscheibe (52) und zur Erhöhung des Drehmoments der Nockenscheibe (52), um die Öffnungsbewegung des Ventilzapfens (40) zu dämpfen, die Reibung des ersten 0-Rings (512) zu reduzieren sowie den Anfangsdrehmoment des Ventilzapfens (40) zu reduzieren, damit eine einwandfreie Verbrennung eines Gasbrenners von Feuerzündung bis vollständiger Verbrennung sicherstellen zu können.

Die Stange (60) ist an der angemessener Stelle der vom Ventilzapfen (40) gegenüberliegenden Seite des Ventilstößels (20) ausgestaltet und zwar ist in die Innenbohrung des zweiten Magnetelements (32) gelenkig gelagert. In der Stange (60) weist zusätzlich einen Druckstück (64) auf, der draußen an dieser Kurbelstange (60) verlängernd herausrägt und durch ein drittes Rückstellelement (63) unterstützt.

Die Brücke (70) ist mittels einer Anlenkwelle (71) im Ventilhauptteil (10) gelenkig verbunden. Das an der Seite der Anlenkwelle vorgesehene Ende der Brücke (70) dient als das erste Zusammenwirkungsende (72) zur Berührung mit der Bewegungskurve (521) der Nockenscheibe (52) und das andere Ende der Brücke (70) dient als das mit dem zweiten Magnetelement (32) gelenkig verbundene zweite Zusammenwirkungsende (73). Ein zweites Rückstellelement (62) ist im Ventilhautpteils (10) angebracht. Mittels der Zusammenwirkung zwischen dem zweiten Rückstellelement (62) und dem zweiten Magnetelement (32) kann sich das erste Zusammenwirkungsende (72) der Brücke (70) zweckmäßig mit der Bewegungskurve (521) der Nockenscheibe (52) in Berührung kommen.

Der Schalter (90) ist draußen am Ventilhauptteil (10) und zwar in der Zugstrecke des Ventilstößels (20), Ventilzapfens (40) und der Stange (60) im Ventilgehäuse (10) angebracht, damit nach vollständigem geöffneten Zug des Ventilzapfens (40) die Stange (60) diesen Schalter (90) betätigen kann, um die Umdrehungen des Motors (51) unterbrechen zu können und einen vollständigen Öffnungszustand konstant halten zu können. Ein zweiter O-Ring ist zusätzlich zwischen dem Ventilhauptteil (10) und dem Schalter (90) angebracht, um vor eine Gasleckgefahr bzw. eine Rostbildung am Kontakt des Schaters (90) verhüten zu können.

Ein luftdurchlässiges Gehäuse (80) ist an der gegenüber dem Ventilstößel (20) liegenden Seite des Ventilzapfens (40) ausgebildet. Ein C-förmiger Ring (81) ist an dem durch das Gehäuse (80) vorgesehenen Abschnitt des Ventilstößels (20) angeordnet, damit im Verlauf der Bewegungen des Ventilstößels (20) in Richtung auf die Innenseite des Ventilhauptteils (10) der C-förmiger Ring (81) das Gehäuse (80) zusammenwirken kann und weiterhin den Ventilzapfen (40) zu bewirken, um diesen aus der Ventilöffnung (A3) des Gasventilgehäuses (A) trennen zu können. Ausserdem ist eine Scheibe (23) an dem zwischen dem Gehäuse (80) und dem Ventilhauptteil (10) vorgesehenen Abschnitt des Ventilstößels (20) angeordnet und zwar dessen erstes Rückstellelement (21) ist zwischen der Scheibe (23) und dem Ventilhauptteil (10) anordenbar. Eine kleine Ventilöffnung (41) ist zusätzlich mitten in der Bohrung des Ventilzapfens (40) ausgestattet. Ein kleiner Ventilzapfen (24) ist am durch das Gehäuse (80) vorgesehenen Ende des Ventilstößels (20) angeordnet, damit er mit der kleinen Ventilöffnung (41) genau im Berührung kommen zu können. Ein fünftes Rückstellelement (25) ist zwischen der Scheibe (23) und dem Gehäuse (80) angebracht und zwar ein dritter O-Ring ist durch das andere Ende des ersten Rückstellelements (21) beansprucht, um ein Gaslecken durch die zwischen der Verbindungsstelle des Anschlussstutzens (12) und des Ventilstößels (20) aufweisende Aussparrung in den Aufnahmeraum (11) des Ventilhauptteils (10) vermeiden zu können. Der dritte 0-Ring (26) dient hierfür zusätzlich den beiden ersten und zweiten 0-Ringen (512, 92) als eine doppelte Sicherstellung gegen Gaslecken.

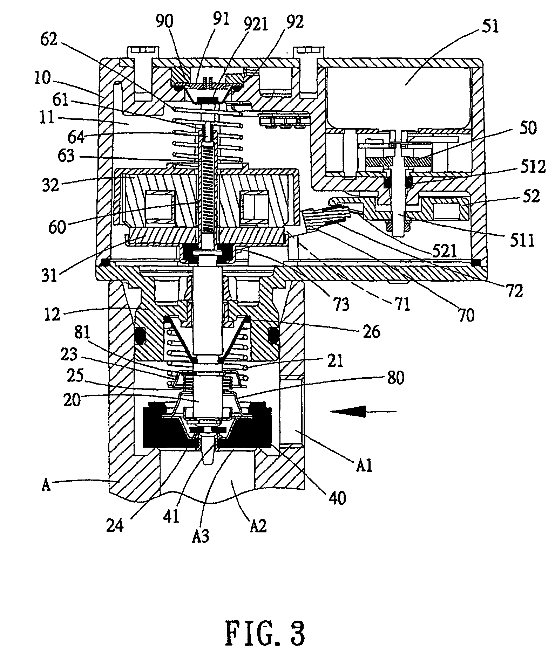

Wie in Fig. 2 ersichtlich, kann die vorliegende Erfindung die Nockenscheibe (52) durch den Motor angetrieben werden und die Brücke (70) dabei zusammenwirken, um den Zug des Ventilzapfens (40) steuern zu können. Das erfindungsgemäße Ventil mit Motorantrieb unter normalen Zustand wird die Ventilöffnung (A3) des Gasventilgehäuses (A3) durch die Wirkung des ersten Rückstellelements (21) vom Ventilzapfen (40) abgedeckt, um den Gasdurchfluss vom Gaseinlass (A1) in den Gasauslass (A2) zu sperren. Aus den Fig. 3, 4, 5, 6 und 7 sind ersichtlich, dass der Motor (51) nach elektrischer Einschaltung die Nockenscheibe (52) bewirken kann, um die Anlenkwelle (71) der Brücke (70) mitzuwirken, damit das zweite Magnetelement (32) entweder in die an den Ventilstößel (20) zugewandte Richtung oder in die vom Ventilstößel (20) abgewandte Richtung steuern zu können.

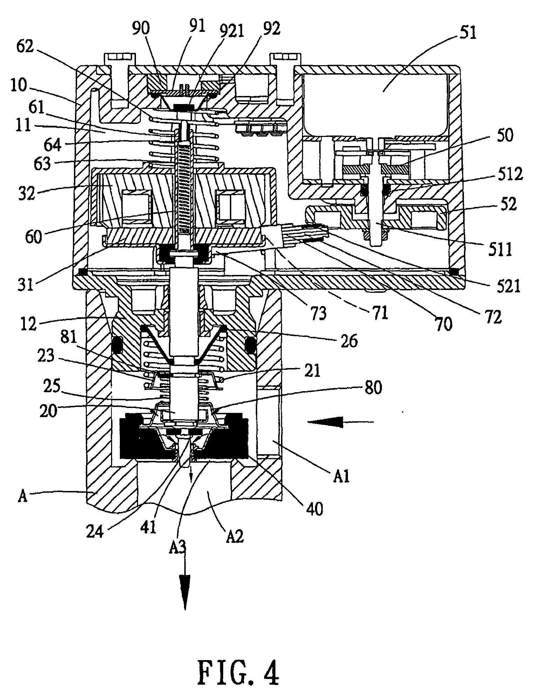

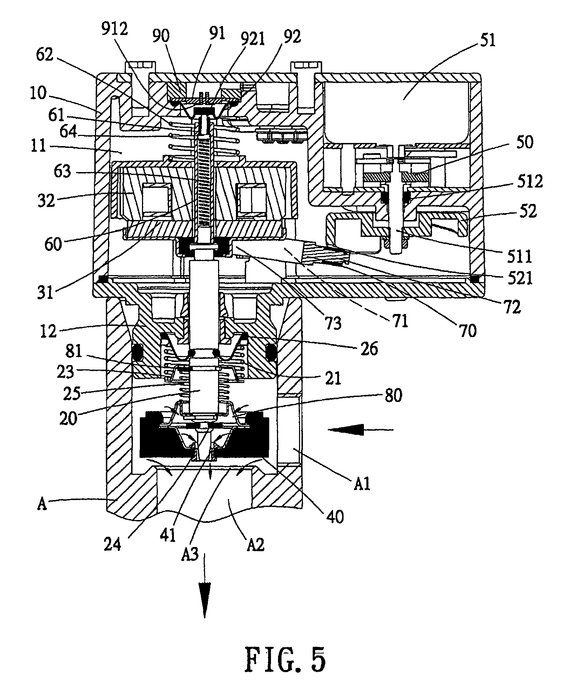

Wie in der Fig. 3 entnommen werden kann, kann die Nockenscheibe (52) vom Motor (51) des Getriebes zur Verminderung der Geschwindigkeit (50) angetrieben werden und gleichzeitig dabei die Brücke (70) zusammenwirken, um das zweite Magnetelement (32) bis zum ersten Magnetelement (31) zu bewegen. Nach elektrischer Einschaltung kann das erste Magnetelement (31) sich mit dem zweiten Magnetelement (32) magnetisch angezogen werden. Gleichzeitig wird das zweite Magnetelement (32) dabei durch die von Nockenscheibe (52) angetriebene Zusammenwirkung der Brücke (70) in von der Ventilöffnung abgewandte Richtung bewegen (wie in den Fig. 4 und 5 ersichtlich, wobei der Ventilstößel (20) in die Innenseite des Ventilhaupteils (10) mitgetrieben kann und der Ventilzapfen (40) aus der Ventilöffnung (A3) entfernen kann, um die Ventilöffnung zu öffnen und die Gasversorgung zu steueren. Sobald der Ventilstößel (20) in die Innenseite des Ventilhauptteils (10) bewegt bis der Ventilzapfen (40) vollständig aus der Ventilöffnung entfernt, kann die Stange (60) sofort den Schalter (90) betätigen, um den Motorantrieb zu unterbrechen.

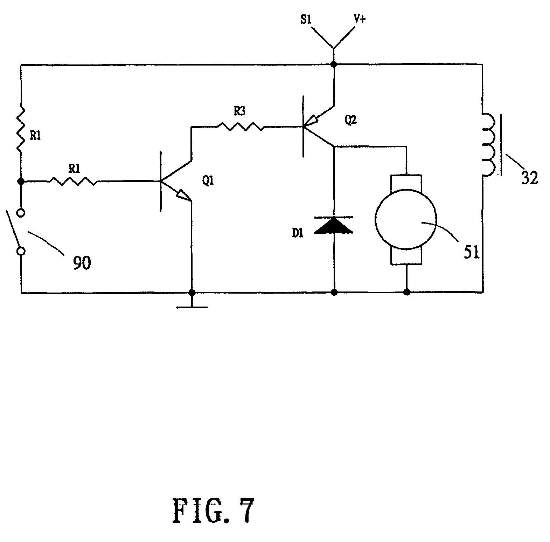

Bei geschlossenen Zustand des Ventilzapfens (40) ist der Kontakt der Leiterplatte (91) des Schalters (90) unter ausgechalteter Bedingung (wie dargestellt in fig. 2). Nach elektrischer Einschaltung des Motors (51) (siehe Schaltplan in Fig. 7) kann er die Nockenscheibe (52) gleichzeitig zusammenwirken und das zweite Magnetelement (32) dabei in die Richtung auf den Ventilstößel (20) mitbringen (wie dargestellt in Fig. 3). Gleichzeitig kann die Magnetspule des zweiten Magnetelements (32) unter elektrisch eingeschalteten Zustand sich mit dem herüber beweglichen ersten Magnetelement (31) magnetisch festangezogen werden. Bei fortlaufenden Umdrehungen der Nockenscheibe (52) durch den Motor (51) wird die Bewegungskurve (521) der Nockenscheibe (52) jetzt in umgekehrter Richtung umgewandelt, wobei das zweite Magnetelement (32) in die von Ventilöffnung (A3) abgewandte Richtung angetrieben wird, um das erste Magnetelement (31) und der Ventilstößel (20) allmählich aufzuheben (wie dargestellt in Fig. 4), damit der Ventilstößel (20) den kleinen Ventilzapfen (24) gleichzeitig bewirken kann, um eine kleine Aussparung herzustellen. Das Gas kann dabei durch diese Aussparrung in den Gasbrenner zum Zündungszweck geflossen werden. Da der Gasfluss ziemlich klein ist, ermöglicht es eine leichte Anzuzündung und kann deswegen eine allmähliche Anzündungswirkung erzielt werden.

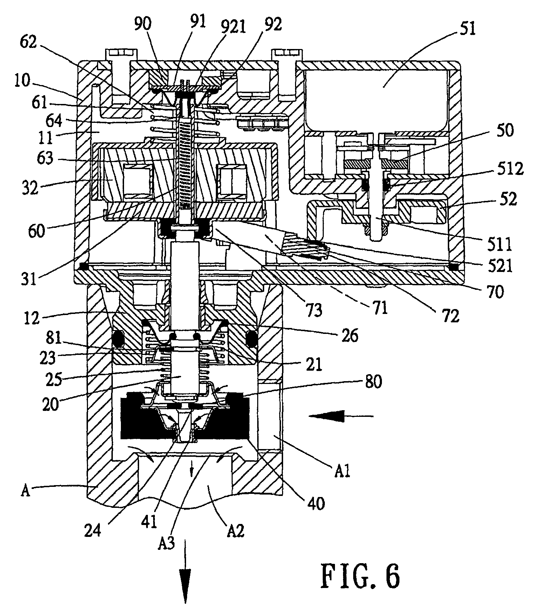

Nach der Gasverbrennung wird der Motor weiter laufen, um den Ventilzapfen (40) später aus der Ventilöffnung zu entfernen (wie dargestellt in Fig. 5). Eine große Menge vom Gas kann dabei in den Gasbrenner versorgt werden. Zu diesem Zeitpunkt kann die auf dem ersten Magnetelement (31) vorgesehene Stange (60) den Schalter (90) sich allmählich ernähern, um den zweiten 0-Ring allmählich zu verformen, damit der an der Innenseite des zweiten O-Rings (92) ausgebildete Induktionsteil (921) die Leiterplatte (91) sich langsam ernähern. Sobald der Induktionsteil (921) sich mit dem Nenneinschaltungs-kontakt der Leiterplatte (91) vollständig in Berührung gekommen ist, wie aus den Fig. 6 und 7 ersichtlich, wird der Antrieb des Motors (51) sofort abgesperrt. Die Bewegung des Ventilzapfens (40) wird dabei bis vollständig geöffneten Zustand der Ventilöffnung (A3) unterbrochen (wie aus der Fig. 6 ersichtlich).

Unter elektrisch ausgeschalteten Zustand kann das zweite Magnetelement (32) sich mit dem ersten Magnetelement (31) nicht mehr magnetisch angezogen werden, dabei kann der Ventilstößel (20) mit dem Ventilzapfen (40) durch den Stoß des ersten Rückstellelements (21) die Ventilöffnung (A3) schnell abdecken, um ein sicheres Zuschließen des erfindungsgemäßen Ventils zu gewährleisten. Ein Vorteil der Erfindung besteht darin, dass bei irgend einem elektrisch ausgeschalteten Zustand des Ventils das erste Magnetelement (31) zusammen mit dem Ventilstößel (20) und dem Ventilzapfen (40) wieder unter dem wie in Fig. 2 dargestellten Zustand zurückgekehrt werden kann und beim Weiterlaufen des Motors (51) das zweite Magnetelement (32) weiter bewirken kann, um sich zuerst mit dem ersten Magnetelement (31) magnetisch anzuziehen, bis der Ventilzapfen (40) die Ventilöffnung (A3) wieder vollständig entfernt und dessen Bewegung nach Betätigung des Schalters (90) unterbricht.

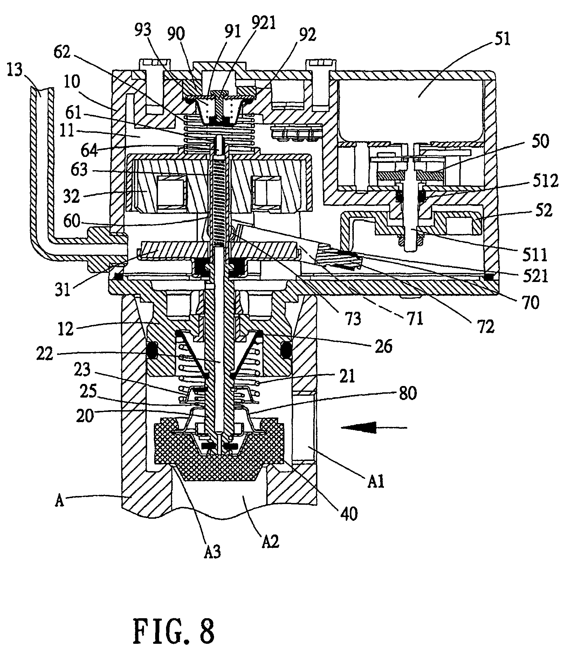

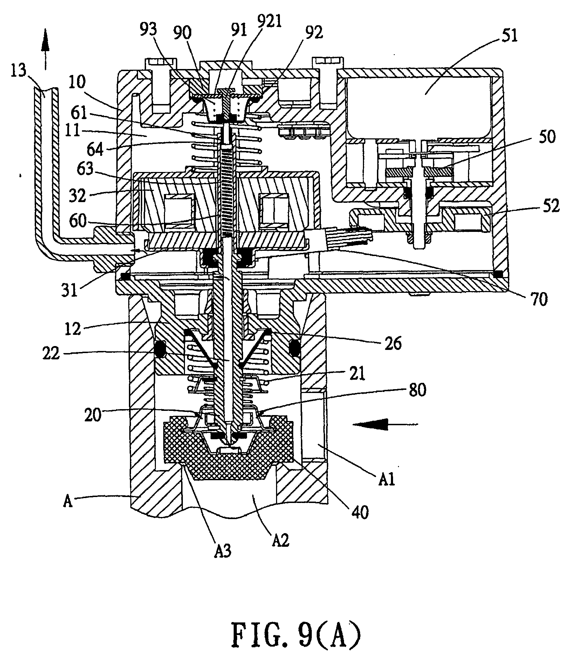

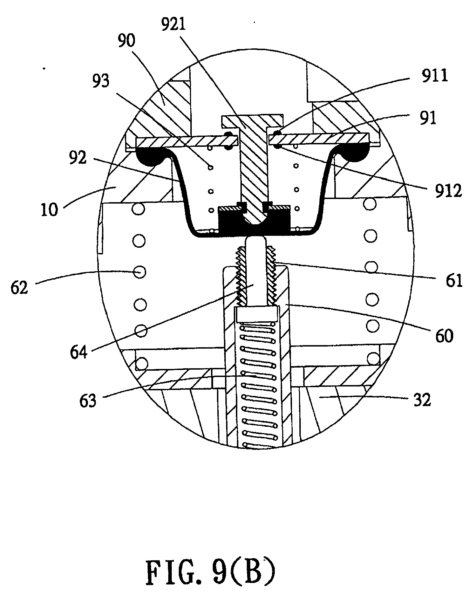

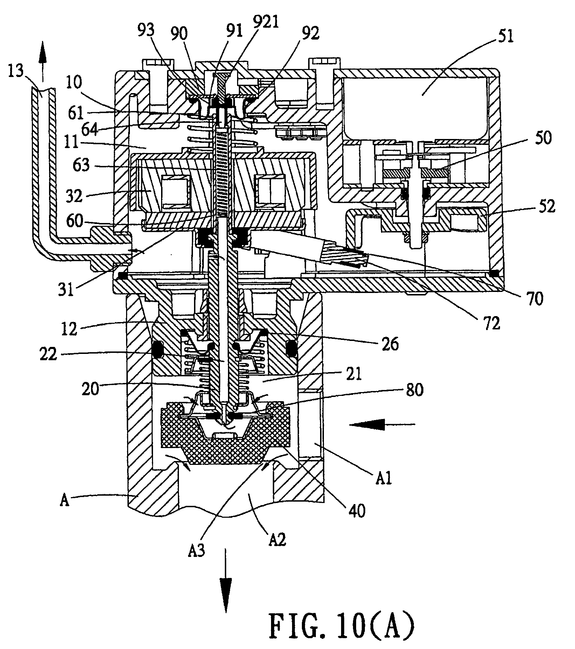

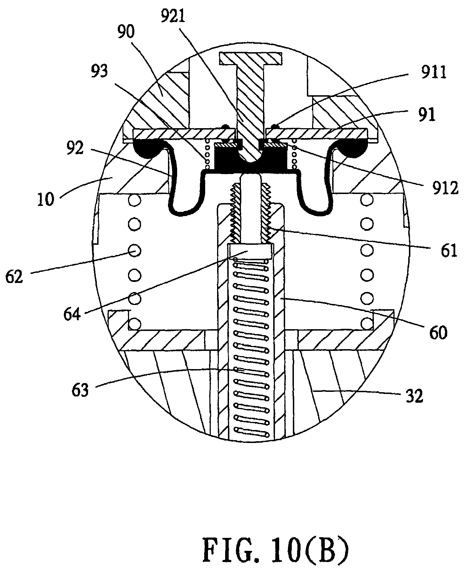

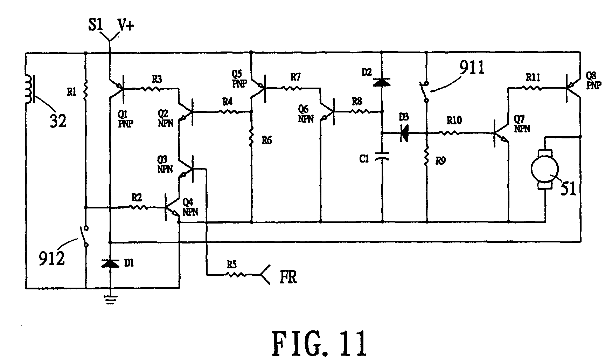

Die Fig. 8 zeigt eine weitere Realisierugnsform der vorliegenden Erfindung, die sich von derjenigen des o.g. Ausführungsbeispiels im wesentlich statt eines kleinen Gasdurchflusses durch den Zug des Ventilzapfens durch ein draußen am Ventilhauptteil (10) angeordnetes Anzünderrohr (13) für kleine Gasversorgung in einen anderen Gasbrenner unterscheidet und die Achse des Ventilstößels (20) in Form eines rohrförmigen Gasdurchgang ausführt, wobei der Gasdurchgang (22) von der in die Innenseite des Gehäuses (80) durchgebohrene Stirnseite in die Innenseite des Ventilhauptteils (10) ausgebildet ist. Wenn der Ventilstößel (20) in Richtung auf die Innenseite des Ventilhauptteils (10) bewegt, kann eine kleine Menge vom Gas zuerst durch den Gasdurchgang (22) des Ventilstößels (20) in den Ventilhauptteil (10) fließen und weiter durch das Anzünderrohr (13) in den Feueranzünder zum Anzündungszweck versorgt, wie aus den Fig. 9 (A) und (B) ersichtlich, und zu diesem Zeitpunkt wird der Antrieb des Motors (51) unterbrochen (wie dargestellt im Schaltplan der Fig. 11), da der Nenn-Ausschaltkontakt (911) des Schalters (90) gleichzeitig betätigt wird. Sobald ein Flammensignal (FR) überwacht und eine Anzündung erfolgt ist, wird ein entsprechendes Signal in die FR-Stelle der Steuerungsstromkreis (wie dargestellt in Fig. 11) übertragen, um den Motor (51) zu befehlen, weiter zu umdrehen und der Ventilstößel (20) mit dem Ventilzapfen (40) werden weiter in die Innenseite des Ventilgehäuses (10) angetrieben, wie dies aus den Fig. 10 (A) und Fig. 10 (B) ersichtlich, bis der zweite O-Ring (92) durch die Zusammenwirkung der Stange (60) vollständig auf der Leiterplatte (91) anlegt. Sobald der Induktionsteil (921) mit dem Nenn-Einschaltungskontakt (912) der Leiterplatte (91) elektrisch eingeschaltet ist, wird der Antrieb des Motors (51) wieder unterbrochen, damit der Ventilzapfen (40) die Ventilöffnung (A3) unter dem vollständig geöffneten Zustand konstant halten zu können.

Es ist auch möglich, die Stange (60) vorzugsweise mit Gewinden (61) zum Zweck für Einstellung des Abstands zwischen der Stange (60) und dem Schalter (90) auszuführen, um den Zeitpunkt für Absperrung eines Motorantriebssignals rechtzeitig entscheiden zu können und einen entsprechenden Zug des Ventilzapfens (40) einstellen zu ermöglichen. Es ist auch möglich, ein drittes Rückstellelement (63) gelenkig in der Kurbelstange (60) anzuordnen, damit es beim Berührung der Stange (60) mit dem Schalter (90) ein dabei bei Unterbrechnung des Antriebs des Motors heibeiführender Rückstoß gleichzeitig aufnehmen kann, um eine Blockierungsgefahr des Getriebes zur Verminderung der Geschwindigkeit (50) zu vermeiden. Es ist ferner auch möglich, ein viertes Rückstellelements (93) zwischen der Leiterplatte (91)und dem Induktionsteil (921) des Schalters (90) anzubringen, damit bei Trennung der Stange (60) vom Schalter (90) der Nenn-Ausschaltkontakt (911) des Schalters (90) durch Zusammenwirkung dieses vierte Rückstellelements (93) wieder elektrisch eingeschaltet werden zu können.

Angesichts des obenstehenden schalt das Ventil mit Motorantrieb gute Gasdurchflusssteuerungseigenschaften, wobei die Nockenscheibe und die dabei zusammenwirkende Brücke durch einen Motor angetrieben werden, damit das zweite Magnetelement sich gegenseitig mit dem erstem Magnetelement magnetisch angezogen werden zu können.

Gleichzeitig kann die Brücke das erste Magnetelement zusammen mit dem Ventilstößel und dem Ventilzapfen in die Innenseite des Ventilhauptteils mitbringen, damit die Ventilöffnung des Gasventilgehäuses allmählich zum entsprechenen Gasversorgungszweck geöffnet werden zu können. Außerdem kann ein Schalter an der angemessenen Stelle in der Zugrichtung des Ventilstößels und des Ventilzapfens angeordnet werden, damit nach einem vollständigen Auszug des Ventilzapfens den Motorantrieb unterbrechen zu können, um eine entspreche konstante Öffnung der Ventilöffnung halten zu können, so dass nur ein kleiner Gasdurchfluss für eine langsame Anzündung versorgt wird. Nach Bestätigung einer erfolgreichen Anzündung kann der Motor bis eine vollständige Ventilöffnung weiter angetrieben werden, um eine sichere Steuerung des Gasdurchflusses eines Heißwassergeräts sicherstellen zu können.

Es wird ein Ventil mit Motorantrieb für Gasdurchflußsteuerung beschrieben, das im wesentlichen aus einem Ventilstößel und einem mit diesem Ventilstößel verbundenen Ventilzapfen besteht, wobei eine Stange zusätzlich an dem gegenüber dem Ventilzapfen liegenden Ende des Ventilhebels aufweist und ein erstes Magnetelement und ein zweites Magnetelement jeweils am Ventilstößel und an der Stange ausbildet; dass es eine durch einen Motor angetriebene Nockenscheibe und eine mitwirkende Brücke aufweist, damit das erste Magnetelement und das zweite Magnetelement sich gegenzeitig magnetisch angezogen werden kann und der Ventilstößel und der Ventilzapfen gleichzeitig zweckmäßig in die Innenseite des Ventilhauptteils angetrieben werden können, um eine optimale Ventilöffnung langsam steuern zu können; dass ein von der Stange betätigte Schalter zusätzlich ausbildet, damit entweder nach vollständigem geöffneten Zug des Ventilzapfens die Stange diesen Schalter betätigen kann, um die Umdrehungen des Motors unterbrechen zu können und einen vollständigen Öffnungszustand konstant halten zu können, oder unterwegs im Laufe der Öffnungen des Ventilzapfens einen Motorantrieb abzusperren, so dass nur ein kleiner Gasdurchfluss für eine langsame Anzündung versorgt wird; dass nach Bestätigung einer erfolgreichen Anzündung der Motor bis eine vollständige Ventilöffnung weiter angetrieben werden kann, um eine sichere Steuerung des Gasdurchflusses eines Heißwassergeräts sicherstellen zu können.

## Patentansprüche

1. Ein Ventil mit Motorantrieb für Gasdurchflußsteuerung eines brennbaren Gases, welches folgendes umfasst
- einen Hauptteil (10), der jeweils einen Aufnahmeraum (11) für die Anordnung von betreffenden Betriebseinrichtungen und einen Anschlussstutzen (12) für die Verbindung mit dem Gasventilgehäuse aufweist;
- einen Ventilstößel (20), der am Anschlussstutzen zwischen dem Ventilhauptteil und dem Gasventilgehäuseausgebildet ist, wobei ein Ende dieses Ventilstößels (20) in einer Bohrung in der Innenseite des Ventilhauptteils (10) angeordnet ist und ein erstes Magnetelement (31) aufweist, und ein anderes Ende dieses Ventilstößels (20) einen gegenüber dem Ventilstößel (20) liegenden Ventilzapfen (40) aufweist, eine Scheibe an die am Ventilstößel (20) angeordnet ist, um ein erstes Rückstellelement (21) darauf anbringen zu können, das den Ventilstößel (20) in Richtung auf die Ventilöffnung (13) drücken kann;
**dadurch gekennzeichnet, dass** das Ventil auch folgendes umfasst:
- ein Antriebswerk, das aus einem außen am Ventilhauptteil (10)vorgesehenen Motor (51) und einem Getriebe zur Verminderung der Geschwindigkeit (50) besteht, und zusätzlich eine Antriebswelle (511) aufweist,deren Verlängerung im Ventilhauptteil (10) mit einer Nockenscheibe (52) zusammenwirkt, einen O-Ring (512) an der Anschlussstelle zwischen der Antriebswelle (511) und dem Ventilhauptteil (10) zur Isolierung des Gases vom Motor (51);
- eine Brücke (70), die mittels einer Anlenkwelle (71) im Ventilhauptteil (10) gelenkig verbunden ist und wobei das an der Seite der Anlenkwelle (71) vorgesehene Ende der Brücke (70) als das erste Zusammenwirkungsende zur Berührung mit der Nockenscheibe (52) und das andere Ende der Brücke (70) als das mit dem zweiten Magnetelement (32) gelenkig verbundene zweite Zusammenwirkungsende dient; ein zweites Rückstellelement (62) im Ventilhauptteil(10), das mit der Brücke (70) gelenkig verbunden ist und mit ihr zusammenwirkt und entweder in der zweite Magnetelement (32) zugewandte Richtung oder von dem zweiten Magnetelement (32) abgewandten Richtung bewegen kann; wobei das zweite Magnetelement (32) ein Magneteisen ist und eine Magnetspule aufweist, damit im elektrisch eingeschalteten Zustand das erste und das zweite Magnetelement gegenseitig magnetisch angezogen werden und zusammen beweglich sind;
- eine Stange (60), die an einer Stelle der dem Ventilzapfen (40) gegenüberliegenden Seite des Ventilstößels (20) ausgestaltet ist und die in der Innenbohrung des zweiten Magnetelements (32) angeordnet ist; wobei die Stange (60) zusätzlich einen Druckstück (64)aufweist, das aus der Stange (60) herausragt und ein drittes Rückstellelement unterstützt
- einen Schalter (90), der außen am Ventilhauptteil (10) ausgebildet ist und zwar in der Zugstrecke der Öffnung des Ventilzapfens (40) liegt, wobei er einen zweiten O-Ring (92) zur Verhütung einer Gasleckgefahr aufweist, damit im Verlauf der Ventilöffnung durch die Bewegungen des Ventilstößels (20) mit dem Ventilzapfen (40) die Stange einen Nenn-Einschaltkontakt dieses Schalters (90)rechtzeitig betätigen kann, um den Motorantieb abzusperren, oder während der Bewegungen der Stange (60) einen Nen-Ausschaltkontakt des Schalters (90) rechtzeitig auszuschalten, um den Motorantrieb zu unterzubrechen,
wobei das Ventil mit Motorantrieb im normalen Zustand die Ventilöffnung (A3)des Gasventilgehäuses (A) durch die Wirkung des ersten Rückstellelements (21) vom Ventilzapfen (40) abgedeckt werden kann, um den Gasdurchgang zu sperren; und wobei der Motor (51) nach elektrischer Einschaltung die Nockenscheibe (52) bewegen kann, um die Anlenkwelle (71) der Brücke (70) mitzubewegen, damit das zweite Magnetelement (32) entweder in die dem Ventilstößel (20) zugewandte Richtung oder in die dem Ventilstößel (20) abgewandte Richtungbewegt werden kann; so dass, wenn es sich dem ersten Magnetelement (31) nähert, die Magnetspule elektrisch aufgeladen werden kann, damit das erste und zweite Magnetelement (31,32) sich gegenzeitig magnetisch anziehen können; und wobei bei Bewegung des von der Nockenscheibe (52) angetriebenen zweiten Magnetelements (32) in die Innenseite des Ventilhauptteils (10) der Ventilstößel (20) und der Ventilzapfen (40) aus der Ventilöffnung (A3) wegbewegt werden können, um die Ventilöffnung (A3) zum Gasversorgungszweck langsam zu öffnen; wobei im Verlauf der Bewegungen des Ventilstößels (20) und des Ventilzapfens (40) die Stange (60) den Nenn-Ausschaltkontakt des Schalters (90) rechtzeitig betätigen kann, um den Motorantrieb abzusperren; und wobei nach einer erfolgreichen Zündung des Gases der Motor wieder eingeschaltet werden kann und sobald der Ventilzapfen (40) vollständig geöffnet ist, der Nenn-Einschaltkontakt des Schalters (90) erneut ausgeschaltet wird, so dass der Motorantrieb wieder abgesperrt wird.

2. Ventil mit Motorantrieb für Gasdurchflußsteuerung nach Anspruch 1, **dadurch gekennzeichnet, dass** ein luftdurchlässiges Gehäuse (80) an der gegenüber dem Ventilstößel (20) liegenden Seite des Ventilzapfens (40) ausgebildet ist und eine kleine Ventilöffnung (41) zusätzlich mitten in der Bohrung des Ventilzapfens (40) ausgestaltet ist; dass das mit dem Ventilzapfen (40) verbundene Ende des Ventilstößels (20) in diesem Gehäuse (80) anordenbar ist; dass ein kleiner Ventilzapfen (24) am durch das Gehäuse (80) vorgesehenen Ende des Ventilstößels (20) angeordnet ist, damit er mit der kleinen Ventilöffnung (41) genau in Berührung kommen kann; dass ein C-förmiger Ring (81) an dem durch das Gehäuse (80) vorgesehenen Abschnitt des Ventilstößels (20)angeordnet ist, damit im Verlauf der Bewegungen des Ventilstößels (20) in Richtung auf die Innenseite des Ventilhauptteils (10) der C-förmige Ring (81) das Gehäuse (80) mitwirken kann und weiterhin den Ventilzapfen (40) zu bewirken, um diesen aus der Ventilöffnung des Gasventilgehäuses (A) trennen zu können.

3. Ventil mit Motorantrieb für Gasdurchflußsteuerung nach Anspruch 1, **dadurch gekennzeichnet, dass** die Achse des Ventilstößels (20) in Form eines rohrförmigen Gasdurchgangs ausgeführt ist, wobei der Gasdurchgang (22) von der in die Innenseite eines an der gegenüber dem Ventilstößel liegenden Seite des Ventilzapfens ausgebildeten luftdurchlässigen Gehäuses (80) durchgebohrten Stirnseite in der Innenseite des Ventilhauptteils (10) angeordnet ist; dass ein Anzünderrohr (13) im Aufnahmeraum des Ventilhaupteils (10) und im Anschluß mit einem Feueranzünder aufweist; dass ein O-Ring zusätzlich an der Verbindungsstelle zwischen dem Ventilstößel (20) und dem Anschlussstutzen (12)zum Gaslecksperrungszweck angeordnet ist; dass ein kleiner Ventilzapfen an der Stirnseite des Ventilstößels (20) angeordnet ist, um im Normalzustand ein Gaslecken durch den rohrförmigen Gasdurchgang (22) zu vermeiden.

## Claims

1. Motor-driven valve for flow control of a combustible gas, comprising the following parts:
- a main body (10), which includes an admission chamber (11) which hosts corresponding fittings and a nozzle (12) to connect with gas valve housing (A);
- a valve rod (20), which is located at the nozzle (12), between the main valve body (10) and the gas valve housing (A), wherein one of the valve rod (20) ends goes through a bore located inside the main valve body (10) and includes a first magnet element (31), and another valve rod (20) end has a valve plug (40) situated opposite from the valve rod (20), with a disc incorporated to the valve rod (20) so that a first spring-back element (21) can press the valve rod (20) in the direction of the valve opening (13);
**characterized in that** said valve also comprises the following parts:
- a drive mechanism made of a motor (51), provided outside the valve body (10) and a speed reducing gear system (50); and additionally a drive shaft (511), the extension of which at the main part of the valve body (10) cooperatively acts with a cam disc (52); an O-ring (512) at the contact point between the drive shaft (511) and the valve body (10) for isolation of motor gas (51);
- a bridge (70), which by means of a link-coupled shaft (71) is articulated to a main valve body (10), wherein the bridge (70) end, provided at the articulated shaft side, dynamically acts as the first cooperative element in order to contact the cam disc (52), and the other bridge end (70) acts as a second cooperative element together with the second magnet element (32); a second spring-back element (62) at the main valve body (10), which is dynamically connected and cooperatively acting to the bridge (70), being able to move towards the second magnet element (32) or away from it; wherein the second magnet element (32) is a magnet iron with a magnet coil so that after electrically turning on, the first and second magnet elements magnetically attract each other and act as movable parts;
- a bar (60), which is located on the valve rod (20) end distal from the valve plug (40) and fits in the inner bore of the second magnet element (32), wherein the bar (60) has an additional pressure element (64) which protrudes from the bar (60) and supports a third reset element (63);
- a switch (90), which is located outside the main valve body (10), particularly at the valve plug (40) opening lift, including a second O-ring (92) to avoid a gas leak hazard, so that during valve opening action through the movement of the valve rod (20) and the valve plug (40), the bar (60) can timely activate a nominal connecting contact of this switch (90) to stop motor drive, or during bar (60) movement, to timely turn off a nominal disconnecting contact of the switch (90) in order to interrupt motor drive,
wherein the motor-driven valve, in normal condition of the valve opening (A3) of the gas valve housing (A), can be covered by the valve plug (40) through the action of the first spring-back element (21) in order to block gas flow; and wherein the motor (51) after electrically turned on is able to move the cam disc (52), so as to move the link-coupled shaft (71) of the bridge (70), enabling the second magnet element (32) to move towards or away from the valve rod (20); so that, when the second magnet element (32) approaches the first magnet element (31), the magnet coil can be electrically charged, so that the first and second magnet elements (31, 32) can magnetically attract each other; and wherein, with the movement of the second magnet element (32) driven by the cam disc (52) towards the inside of the main valve body (10), the valve rod (20) and the valve plug (40) can move away from the valve opening (A3), in order to slowly open the valve opening for gas supply; the bar (60) timely activating the nominal disconnecting contact of the switch (90) during valve rod (20) and valve plug (40) movement, to stop motor drive; and wherein, after a successful gas ignition, the motor can be turned on again and, as soon as the valve plug (40) is totally open, the nominal connecting contact of the switch (90) is again turned off so that motor drive is again stop.

2. Motor-driven valve for flow control according to Claim 1, **characterized in that** an air-permeable housing (80) is located at the valve plug (40) side facing to the valve rod (20) and has an additional little valve opening (41) in the middle of a bore of the valve plug (40); **in that** the valve rod (20) end connected to the valve plug (40) fits into the housing (80); **in that** a small valve plug (24) fits into the valve rod (20) end, provided across the housing (80), so that it can precisely come into contact with the small valve opening (41); and **in that** a C-shaped ring (81) fits in the valve rod (20) section which is visible through the housing (80), so that during valve rod (20) movement towards the inside of the main valve body (10), the C-shaped ring (81) action cooperates with that of the housing (80), acting on the valve plug (40), in order to separate it from the valve opening of the gas valve housing (A).

3. Motor-driven valve for flow control according to Claim 1, **characterized in that** the valve rod (20) axle is a pipe-shaped gas passage way (22), wherein the gas passage way (22) going from the bored frontside located within an air-permeable housing (80) formed at the valve plug side opposite the valve rod is situated at the inner area of the main valve body (10); **in that** an ignition pipe (13) goes from the admission chamber of the main valve body (10) and contacts a fire lighter; **in that** an O-ring fits into the contact point between the valve rod (20) and the nozzle (12) to avoid gas leaks; and **in that** a small valve plug fits at the frontside of the valve rod (20) in order to avoid a gas leak through the pipe-shaped gas passage way (22) in normal conditions.

## Revendications

1. Une vanne à entraînement motorisé pour commande du débit de gaz d'un gaz combustible qui comprend les éléments suivants :
- une partie principale (10), qui présente respectivement une chambre d'admission (11) pour installer les équipements de service correspondants et une conduite de raccordement (12) permettant d'assurer la liaison avec le boîtier de la vanne de gaz;
- un guide ou guide de vanne (20) placé sur la conduite de raccordement entre la partie principale de la vanne et le boîtier de la vanne de gaz, une extrémité de ce guide de vanne (20) étant placée dans un alésage à l'intérieur de la partie principale de la vanne (10) et présente un premier élément magnétique (31), et une autre extrémité de ce guide de vanne (20) présente un tenon de soupape (40) qui se trouve face au guide de vanne (20), un disque est monté sur le guide de vanne (20), pour pouvoir y monter un premier élément de rappel (21), qui peut presser le guide de vanne (20) dans le sens de l'ouverture de la vanne (13) ;
**caractérisée en ce que** la vanne comprend aussi les éléments suivants :
- un module d'entraînement qui comprend un moteur (51) prévu à l'extérieur de la partie principale de la vanne (10) et un entraînement permettant de diminuer la vitesse (50), et présente également un arbre d'entraînement (511), dont le prolongement dans la partie principale de la vanne (10) concourt avec un disque à came (52), un joint torique d'étanchéité (512) et un point de raccordement entre l'arbre d'entraînement (511) et la partie principale de la vanne (10) pour isoler le gaz du moteur (51);
- un pont (70), raccordé de manière articulée au moyen d'un arbre articulé (71) dans la partie principale de la vanne (10), l'extrémité du pont (70) se trouvant du côté de l'arbre articulé (71) servant de premier élément coopèrent pour être en en contact avec le disque à came (52) et l'autre extrémité du pont (70) servant de deuxième élément coopèrent avec le deuxième élément magnétique (32) à qui est raccordé de manière articulée; un deuxième élément de rappel (62) dans la partie principale de la vanne (10), est relié de manière articulée avec le pont (70) et concourant avec lui et peut se déplacer soit dans la direction tournée vers le deuxième élément magnétique (32), soit dans la direction opposée au deuxième élément magnétique (32) ; le deuxième élément magnétique (32) étant un aimant magnétique et présentant une bobine magnétique, afin que, en état activé électriquement, le premier et le deuxième élément magnétique s'attirent l'un à l'autre et restent mobiles;
- une barre (60), qui est placée sur un point du guide de vanne (20) opposé au tenon de la vanne (40) situé sur le côté opposé du guide de vanne (20), et qui est montée dans l'alésage intérieur du deuxième élément magnétique (32) ; la barre (60) présentant également une pièce de pression (64), qui dépasse de la barre (60) et supporte un troisième élément de rappel et
- un commutateur (90) monté à l'extérieur de la partie principale de la vanne (10) et se trouvant cependant sur la course de l'ouverture du tenon de la vanne (40), présentant un deuxième joint torique d'étanchéité (92) permettant d'éviter un risque de fuite de gaz, pour que la barre puisse activer à temps un contact d'activation nominal de ce commutateur (90) en cours d'ouverture de l'ouverture de vanne par les mouvements du guide de vanne (20) avec le tenon de soupape (40), pour bloquer l'entraînement du moteur, ou puisse désactiver à temps un contact de désactivation nominal du commutateur (90) lors des déplacements de la barre (60), pour interrompre l'entraînement du moteur,
où ladite vanne à entraînement motorisé en état normal peut couvrir l'ouverture de la vanne (A3) du boîtier de la vanne de gaz (A) par l'action du premier élément de rappel (21) du tenon de la vanne (40), afin de bloquer le passage du gaz ; et le moteur (51) après activation électrique pouvant mouvoir le disque à came (52), pour déplacer en même temps l'arbre articulé (71) du pont (70), afin que le deuxième élément magnétique (32) puisse être déplacé soit dans la direction face au guide de vanne (20) ou dans la direction opposée au guide de vanne (20) ; de sorte que, quand il s'approche du premier élément magnétique (31), la bobine magnétique puisse être chargée électriquement, pour que le premier et le deuxième élément magnétique (31,32) puisse s'attirer mutuellement ; et lors du déplacement du deuxième élément magnétique (32), entraîné par le disque à came (52) dans la partie intérieure de la partie principale de la vanne (10), le guide de vanne (20) et le tenon de la vanne (40) pouvant être déplacés hors de l'ouverture de la vanne (A3), pour ouvrir lentement l'ouverture de la vanne (A3) à des fins d'alimentation en gaz ; au cours des déplacements du guide de vanne (20) et du tenon de la vanne (40), la barre (60) pouvant actionner à temps le contact de désactivation nominal du commutateur (90) pour bloquer l'entraînement du moteur ; et dans laquelle après un allumage réussi du gaz, le moteur peut être redémarré et, dès que le tenon de la vanne (40) est complètement ouvert, le contact d'activation nominal du commutateur (90) pouvant être à nouveau désactivé, de sorte que l'entraînement du moteur peut être à nouveau verrouillé.

2. Vanne entraînée par un moteur pour commande du débit du gaz selon la revendication 1, **caractérisée en ce que** un boîtier étanche à l'air (80) se trouve sur le côté de la face du tenon de la vanne (40) opposé au guide de vanne (20) et qu'une petite ouverture de vanne (41) supplémentaire est pratiquée au centre de l'alésage du tenon de la vanne (40) ; de sorte que l'extrémité du guide de vanne (20) raccordée avec le tenon de la vanne (40) peut être placée dans ce boîtier (80) ; de sorte qu'un petit tenon de soupape (24) est placé sur l'extrémité du guide de vanne (20) prévue par le boîtier (80), pour qu'il puisse entrer exactement en contact avec la petite ouverture de vanne (41) ; de sorte qu'une bague en forme de C (81) est placée sur la section du guide de vanne (20) prévue par le boîtier, pour que, lors des déplacements du guide de vanne (20) vers l'intérieur de la partie principale de la vanne (10), la bague en forme de C (81) puisse concourir avec le boîtier (80) et continuer à actionner le tenon de la vanne (40), pour pouvoir séparer celui-ci de l'ouverture de vanne du boîtier de la vanne des gaz (A).

3. Vanne à entraînement motorisé pour commande du débit de gaz selon la revendication 1, **caractérisée en ce que** l'axe du guide de vanne (20) a la forme d'un passage de gaz de forme tubulaire, le passage du gaz (22) passant sur la face intérieure de la partie principale de la vanne, par une pièce frontale percée formée par une face du tenon de la vanne se trouvant du côté intérieur de la face interne face au guide de vanne ; de sorte qu'un tuyau d'allumage (13) est monté dans le chambre d'admission de la partie principale de la vanne (10) et présente un allumeur à son extrémité ; de sorte qu'un joint torique d'étanchéité supplémentaire est disposé sur le point de raccordement entre le guide de vanne (20) et la conduite de raccordement (12)à des fins de blocage des fuites de gaz ; de sorte qu'un petit tenon de vanne se trouve sur la face avant du guide de vanne (20) afin d'éviter, dans son état normal, une fuite de gaz par le passage du gaz de forme tubulaire (22)
